# EUROPEAN PATENT APPLICATION

(11) **EP 2 202 991 A2**
(43) Date of publication of application: **30.06.2010**
(21) Application number: 09177723.5
(22) Date of filing: 02.12.2009
(51) Int. Cl.: H04N 13/00

(54) **Stereoscopic image display apparatus and control method thereof**

(30) Priority: 24.12.2008 KR 20080133674
(71) Applicant: SAMSUNG ELECTRONICS CO., LTD., Suwon-si Gyeonggi-do 442-742 (KR)
(72) Inventor: Oh, Sung Bo, Gyeonggi-do (KR)
(74) Representative: D'Halleweyn, Nele Veerle Trees Gertrudis

(57) **Abstract**

Provided are a stereoscopic image display apparatus and a control method thereof which selectively generates one of a two-dimensional and a three-dimensional image in an image information playback device according to whether a user wears stereoscopic glasses. The stereoscopic image display apparatus includes stereoscopic glasses, and an image information playback device including an output unit which generates one of a two-dimensional and a three-dimensional image according to whether the user wears the stereoscopic glasses, and a first transceiver unit which performs bidirectional communication with the stereoscopic glasses.

## Description

### BACKGROUND

### 1. Field

Exemplary embodiments of the present invention relate to a stereoscopic image display apparatus and a control method thereof which selectively generates one of a three-dimensional and a two-dimensional image without an additional operation.

### 2. Description of the Related Art

Owing to the high speed of communication established based on a wideband communication network, simply "listening and speaking communication" such as a telephone has been developed into "seeing and listening multimedia communication" and finally further into "stereoscopically seeing, feeling, and enjoying three-dimensional communication" beyond time and space.

Generally, a stereoscopic image expressing three dimensions relies upon the principle of stereopsis. Binocular disparity, caused by an interval between two eyes in a human separated from each other by about 65 mm, may be the most important factor for three-dimensional effect. That is, when human left-eye and right-eye see correlated two-dimensional (2D) images, these left-eye and right-eye images are transferred to the brain through the retina. Then the brain mixes these images and reproduces the depth and reality of original three-dimensional (3D) images. Such ability is called stereography.

A few techniques to display a 3D stereoscopic image on a 2D screen have been introduced. Specifically, such techniques include glasses type stereoscopic image display (i.e., stereoscopic image display with special glasses), non-glasses type stereoscopic image display (i.e., stereoscopic image display with no special glasses), and a holographic display.

Among the above-described techniques, the glasses type stereoscopic image display technique is divided into a polarized glasses scheme using vibration direction or rotation direction of polarization, a time-sequential glasses scheme to alternately show right and left images while converting the images, and a Pulfrich effect scheme to transfer light of different brightness to the left-eye and right-eye. The non-glasses type stereoscopic image display technique is divided into a parallax barrier scheme to separately observe left-eye and right-eye images by placing an aperture of a vertical lattice shape onto respective images corresponding to the left and right eyes, a lenticular scheme using a lenticular plate in which semicylindrical lenses are arranged, and an integral scheme using a lens plate of a fly-eye shape. The holographic display technique is divided into a laser light reproducing hologram and a white light reproducing hologram.

### SUMMARY

Exemplary embodiments of the present invention address at least the above problems and/or disadvantages and other disadvantages not described above. Also, the present invention is not required to overcome the disadvantages described above, and an exemplary embodiment of the present invention may not overcome any of the problems described above.

An aspect of the present invention provides a stereoscopic image display apparatus and a control method thereof in which one of a contact and a non-contact sensor is attached to glasses worn by a user to view three-dimensional images, and one of two-dimensional and three-dimensional imaging is automatically selected according to whether the user wears the glasses

Additional aspects of the present invention will be set forth in part in the description which follows and, in part, will be obvious from the description, or may be learned by practice of the invention.

In accordance with one aspect of the present invention, a control method of a stereoscopic image display apparatus including stereoscopic glasses and an image information playback device is provided, the method including sensing whether a user wears the stereoscopic glasses, and generating, on the image information playback device, one of a two-dimensional and a three-dimensional image according to whether a user wears the stereoscopic glasses, wherein the stereoscopic glasses and the image information playback device perform bidirectional communication.

The stereoscopic glasses may include one of a contact type and a non-contact type sensor and the sensing whether a user wears the stereoscopic glasses may be performed by the one of the contact type and the non-contact type.

If it is sensed that a user wears the stereoscopic glasses, the image information playback device may generate the three-dimensional image.

If it is sensed that a user does not wear the stereoscopic glasses, the image information playback device may generate the two-dimensional image.

The bidirectional communication may include one of infrared communication, radio frequency communication, Bluetooth communication and Wi-Fi communication.

The stereoscopic glasses may include a first transceiver unit, and if it is sensed that a user wears the stereoscopic glasses, the first transceiver unit may transmit information indicating whether a user wears the stereoscopic glasses to the image information playback device.

The information playback device may include a second transceiver unit, and if the information indicating whether a user wears the stereoscopic glasses is transmitted to the image information playback device, the second transceiver unit included in the image information playback device may receive the information.

The image information playback device may generate the three-dimensional image upon receiving information indicating that a user wears the stereoscopic glasses.

The image information playback device may generate the two-dimensional image upon receiving information indicating that a user does not wear the stereoscopic glasses.

The stereoscopic glasses may include a switch which may be manually set to one of a two-dimensional and a three-dimensional mode, wherein if the two-dimensional mode is set, the image information playback device generates the two-dimensional image, and if the three-dimensional mode is set, the image information playback device generates the three-dimensional image.

In accordance with another aspect of the present invention, a control method of a stereoscopic image display apparatus includes sensing whether a user wears stereoscopic glasses, confirming whether an image information playback device exists within a communication area of the stereoscopic glasses when it is sensed that a user wears the stereoscopic glasses, and selectively generating, at the image information playback device, one of a two-dimensional and a three-dimensional image according to whether the image information playback device is present within the communication area.

The stereoscopic glasses may include one of a contact type and a non-contact type sensor, and the sensing whether a user wears the stereoscopic glasses may be performed by the one of the contact type and the non-contact type sensor.

If it is sensed that a user wears the stereoscopic glasses, the image information playback device may generate the three-dimensional image.

If it is sensed that a user does not wear the stereoscopic glasses, the image information playback device may generate the two-dimensional image.

The stereoscopic glasses may include a first transceiver unit, and if it is sensed that a user wears the stereoscopic glasses, the first transceiver unit may transmit information indicating whether a user wears the stereoscopic glasses to the image information playback device.

The image information playback device may include a second transceiver unit, and if the information indicating whether the user wears the stereoscopic glasses is transmitted to the image information playback device, the transceiver unit included in the image information playback device may receive the information.

The image information playback device may generate the three-dimensional image upon receiving information indicating that a user wears the stereoscopic glasses..

The image information playback device may generate the two-dimensional image upon receiving information indicating that a user does not wear the stereoscopic glasses..

The stereoscopic glasses may include a switch, which is manually settable to one of a two-dimensional and a three-dimensional mode, wherein if the two-dimensional mode is set, the image information playback device generates the two-dimensional image, and if the three-dimensional mode is set, the image information playback device generates the three-dimensional image.

The stereoscopic glasses and the image information playback device may perform bidirectional communication.

The bidirectional communication may include one of infrared communication, radio frequency communication, Bluetooth communication and Wi-Fi communication.

In accordance with another aspect of the present invention, a stereoscopic image display apparatus includes stereoscopic glasses, and an image information playback device including an output unit to generate one of a two-dimensional and a three-dimensional image according to whether a user wears the stereoscopic glasses and a first transceiver unit to perform bidirectional communication with the stereoscopic glasses.

The stereoscopic glasses may include one of a contact type and a non-contact type sensor to sense whether a user wears the stereoscopic glasses.

The stereoscopic glasses may include a first transceiver unit to communicate with the image information playback device.

The stereoscopic glasses may include a switch to manually select one of a two-dimensional and a three-dimensional mode, and if the two-dimensional mode is set, the image information playback device generates the two-dimensional image, and if the three-dimensional mode is set, the image information playback device generates the three-dimensional image.

If a user wears the stereoscopic glasses, the image information playback device may generate the three-dimensional image.

If a user does not wear the stereoscopic glasses, the image information playback device may generate the two-dimensional image.

The bidirectional communication may include one of infrared communication, radio frequency communication, Bluetooth communication and Wi-Fi communication.

### BRIEF DESCRIPTION OF THE DRAWINGS

These and/or other aspects of the invention will become apparent and more readily appreciated from the following description of the exemplary embodiments, taken in conjunction with the accompanying drawings of which:
FIG. 1 is a conceptual diagram of a stereoscopic image display apparatus according to an exemplary embodiment of the present invention;
FIG. 2 is a configuration diagram of stereoscopic glasses according to an exemplary embodiment of the present invention;
FIG. 3 is a block diagram of a stereoscopic image display apparatus according to an exemplary embodiment of the present invention;
FIG. 4 is a flowchart illustrating a control method of a stereoscopic image display apparatus according to an exemplary embodiment of the present invention; and
FIG. 5 is a flowchart illustrating a control method of a stereoscopic image display apparatus according to another exemplary embodiment of the present invention.

### DETAILED DESCRIPTION

Reference will now be made in detail to the exemplary embodiments of the present invention, examples of which are illustrated in the accompanying drawings, wherein like reference numerals refer to like elements throughout.

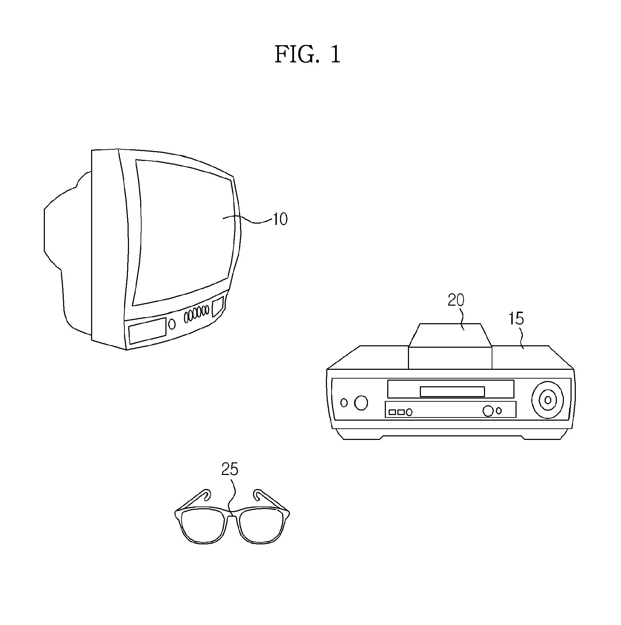

FIG. 1 is a conceptual diagram of a stereoscopic image display apparatus according to an exemplary embodiment of the present invention.

As illustrated in FIG. 1, the stereoscopic image display apparatus includes a display device 10 to generate a stereoscopic image, an image information storage/playback device 15 to play back information stored in a digital video disc (DVD), etc., a liquid crystal shutter driving control device 20 to control left-eye and right-eye images displayed on the display device 10, and a stereoscopic glasses 25 to enable an observer to experience displayed images, which alternate rapidly, as stereoscopic images.

The display device 10 may be a monitor of a personal computer or a TV set. Although not shown in the drawing, the display device 10 may be a projector to project an image signal onto a screen. A cathode-ray tube (CRT) type monitor is generally used for the display device 10 but monitors of other types may be used.

The image information storage/playback device 15 may be household video equipment, such as a personal computer, a video cassette recorder (VCR), a DVD player, a laser disc player, or a video game device.

The liquid crystal shutter driving control device 20 is connected to the display device 10 and the image information storage/playback device 15 and serves to control synchronization between left-eye and right-eye images displayed on a display screen and opening/closing of the stereoscopic glasses 25. The liquid crystal shutter driving control device 20 may be connected to the display unit 10 and the image information storage/playback device 15 by wire using a cable or may be connected thereto wirelessly using infrared light or a radio frequency (RF). In FIG. 1, although the liquid crystal shutter driving control device 20 is provided as a separate device, it may be mounted within the display device 10 or may be manufactured to be integrally constructed with the stereoscopic glasses 25.

Hereinafter, the liquid crystal shutter driving control device 20, the display device 10, and the image information storage/playback device 15 will be collectively referred to as an image information playback device 30.

Left and right windows of the stereoscopic glasses 25 are opened in synchronization with the left-eye and right-eye images displayed on the display device 10. That is, the stereoscopic glasses 25 cause a viewer to experience images, which alternate rapidly, as stereoscopic images. More specifically, the stereoscopic glasses 25 are opened and closed at 60 Hz or more per second in synchronization with a synchronous signal. Then the brain recognizes the two images as stereoscopic images.

While the stereoscopic image display apparatus using shutter glasses has been described with reference to FIG. 1, an exemplary embodiment of the present invention is applicable to a stereoscopic image display apparatus using polarized glasses. In the stereoscopic image display apparatus using the polarized glasses, the above-described liquid crystal shutter driving control device 20 is not provided and the image information storage/playback device 15 may mount a 2D/3D converter therein to selectively generate a 2D or 3D image on a screen of the display device 10. In the stereoscopic image display apparatus using the polarized glasses, the display device 10 and the image information storage/playback device 15 is collectively referred to as the image information playback device 30.

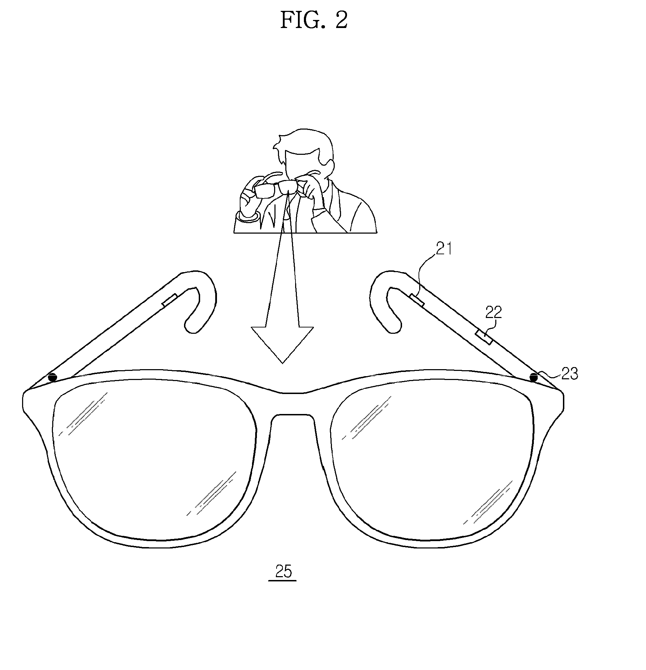

FIG. 2 is a configuration diagram of stereoscopic glasses according to an exemplary embodiment of the present invention.

As illustrated in FIG. 2, the stereoscopic glasses 25 include a sensor unit 21 to sense whether a user wears the stereoscopic glasses 25, a transceiver unit 23 to perform bidirectional communication with the image information playback device 30, and a switch unit 22 to manually select a 3D or 2D image mode, wherein if the 2D mode is set, the image information playback device 30 generates the 2D image, and if the 3D mode is set, the image information playback device generates the 3D image.

The sensor unit 21 may be a contact type sensor or a non-contact type sensor, and the sensor senses whether a user wears the stereoscopic glasses 25.

The contact type sensor may be a touch sensor including an infrared sensor and a capacitive sensor. The infrared sensor uses linearity of infrared rays which are invisible to a viewer. For the infrared touch sensor, an infrared light emitting diode (LED) of a light emitting element faces a photo-transistor of a light receiving element to construct a matrix and a touch point is recognized by sensing a sensor to which light is cut off by an object such as a finger within the matrix. In the capacitive touch sensor, uniform current flows to a touch pad surface and a waveform variation of the current is detected when a human touches the pad surface.

The non-contact type sensor may be an optical sensor which artificially emits a large magnitude of light and receives light reflected back from a viewer colliding with the light, thereby sensing whether the viewer wears the stereoscopic glasses 25.

Upon receiving information, which is sensed by the sensor unit 21 installed on or in the stereoscopic glasses 25 and indicates whether a user wears the stereoscopic glasses, the transceiver 23 transmits the information to the image information playback device 30, thereby causing the image information playback device 30 to selectively generate a 3D or 2D image. When the image information playback device 30 generates a 3D image, the transceiver unit 23 may receive a synchronous signal for an image which alternates rapidly.

The transceiver unit 23 may be an infrared transceiver and an RF transceiver. The infrared transceiver performs infrared communication with the image information playback device 30. To this end, a light emitting element and a light receiving element may be installed on or in the stereoscopic glasses 25. An LED may be used as the light emitting element. The LED generates optical waves with various wavelengths at an accurate time and may easily adjust an irradiation angle. An infrared detector may be used as the light receiving element. The infrared detector may use a PIN diode (e.g., inversely biased P-N junction diode) and may have high sensitivity and sufficiently low magnetic capacitance. The RF transceiver may perform communication using an RF generated when RF current is supplied to an antenna.

In addition to the above-described transceivers, any communication antenna, which may perform bidirectional communication such as Bluetooth communication or Wi-Fi communication, may be used for the transceiver unit 23 installed on or in the stereoscopic glasses 25.

The switch unit 22 is a button which may be installed at one side of the stereoscopic glasses 25 so that a user may manually select a 2D or 3D image mode irrespective of whether the user wears the stereoscopic glasses 25.

Operation of the switch unit 22 could result in a signal being sent from the stereoscopic glasses 25 to the image information playback device 30 through the respective transceiver units. That is, if the switch unit 22 is set to the 2D mode, the image information playback device 30 generates the 2D image, and if the switch unit 22 is set to the 3D mode, the image information playback device 30 generates the 3D image. The signal sent from the stereoscopic glasses 25 to the image information playback device 30 might simply be the same as a signal sent indicating whether the user wears the stereoscopic glasses 25. Alternatively, the signal could be a separate signal which commands the information playback device 30 to generate the one of the 2D and the 3D image.

Additionally, while the above example describes the switch unit 22 as being installed at one side, one of skill in the art would understand that the switch unit 22 may be installed at any location on or in the stereoscopic glasses 25.

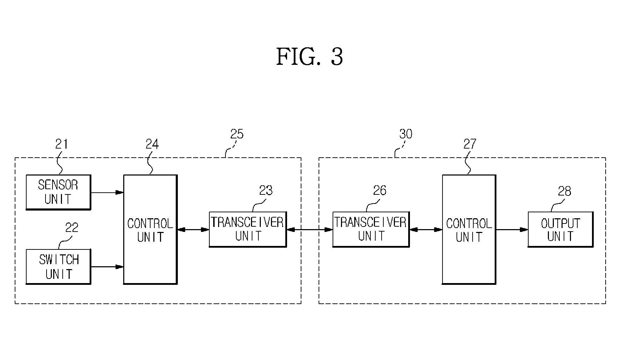

FIG. 3 is a block diagram of a stereoscopic image display apparatus according to an exemplary embodiment of the present invention.

As illustrated in FIG. 3, the stereoscopic image display apparatus includes the stereoscopic glasses 25 and the image information playback device 30. The stereoscopic glasses 25 include the sensor unit 21, the switch unit 22, a control unit 24, and the transceiver unit 23. The image information playback device 30 includes a transceiver unit 26, a control unit 27, and an output unit 28.

The sensor unit 21 of the stereoscopic glasses 25 may sense whether a user wears the stereoscopic glasses 25, by a contact type sensor (e.g., a touch sensor) or a non-contact type sensor (e.g., an optical sensor). The above-described sensors are used to sense whether a user wears the stereoscopic glasses 25.

The switch unit 22 of the stereoscopic glasses 25 is a button which may be installed at one side of the stereoscopic glasses 25 so that a user may manually select a 2D or 3D image mode irrespective of whether the user wears the stereoscopic glasses 25.

Operation of the switch unit 22 could result in a signal being sent from the stereoscopic glasses 25 to the image information playback device 30 through the respective transceiver units. That is, if the switch unit 22 is set to the 2D mode, the image information playback device 30 generates the 2D image, and if the switch unit 22 is set to the 3D mode, the image information playback device 30 generates the 3D image. The signal sent from the stereoscopic glasses 25 to the image information playback device 30 might simply be the same as a signal sent indicating whether the user wears the stereoscopic glasses 25. Alternatively, the signal could be a separate signal which commands the information playback device 30 to generate the one of the 2D and the 3D image.

Additionally, while the above example describes the switch unit 22 as being installed at one side, one of skill in the art would understand that the switch unit 22 may be installed at any location on or in the stereoscopic glasses 25.

The control unit 24 of the stereoscopic glasses 25 controls the transceiver unit 23 to transmit information to the image information playback device 30 according to glasses wearing information transmitted by the sensor unit 21 and 2D or 3D image selection information transmitted by the switch unit 22. In the case where a stereoscopic image is obtained using shutter glasses, which are an example of the stereoscopic glasses, the control unit 24 controls left and right windows of the stereoscopic glasses 25 to be opened in synchronization with left-eye and right-eye images displayed on the display device 10 so that a viewer may experience images, which are displayed while alternating rapidly, as stereoscopic images.

Upon receiving information which is sensed by the sensor unit 21 installed on or in the stereoscopic glasses 25 and indicates whether a user wears the stereoscopic glasses 25, the transceiver unit 23 of the stereoscopic glasses 25 transmits the information to the image information playback device 30, thereby causing the image information playback device 30 to selectively generate a 3D or 2D image.

The transceiver unit 26 of the image information playback device 30 may be an infrared transceiver or an RF transceiver. The infrared transceiver may perform infrared communication with the stereoscopic glasses 25. To this end, a light emitting element and a light receiving element may be installed on or in the image information playback device 30. The RF transceiver may perform communication using an RF generated when RF current is supplied to an antenna.

The output unit 28 of the image information playback device 30 refers to a display device and may use a monitor of a personal computer or a TV set. Although not shown in the drawing, the output unit 28 may be a projector to project an image signal onto a screen. A CRT type monitor is generally used for the output unit 28.

The control unit 27 of the image information playback device 30 may selectively generate either a 3D image or a 2D image according to the information received from the transceiver unit 26. Namely, if the information transmitted from the stereoscopic glasses 25 is determined as wearing of the stereoscopic glasses 25 of a user, the control unit 27 generates a 3D image. If the information transmitted from the stereoscopic glasses 25 is determined as not wearing of the stereoscopic glasses 25 of a user, the control unit 27 generates a 2D image. However, even though the user wears the stereoscopic glasses 25, if a distance between the user and the image information playback device 30 is outside a communication area, the control unit 27 generates a 2D image.

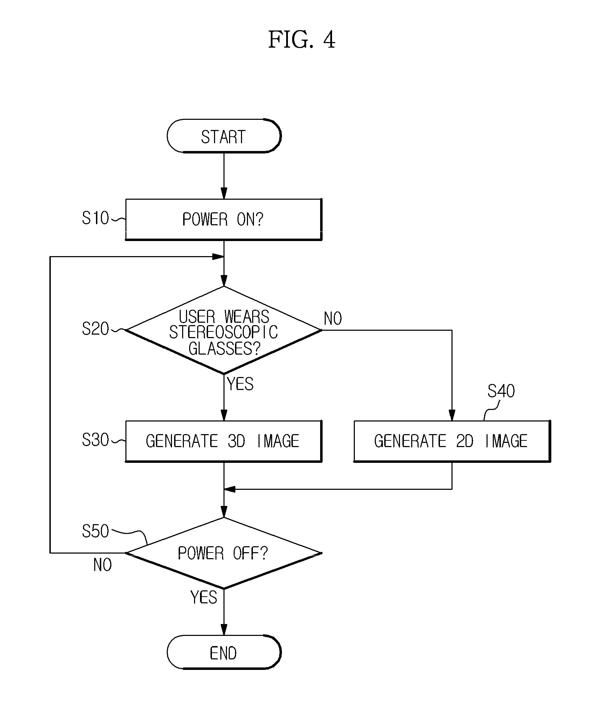

FIG. 4 is a flowchart illustrating a control method of a stereoscopic image display apparatus according to an exemplary embodiment of the present invention.

As illustrated in FIG. 4, if a power of the image information playback device 30 is turned on in step S10, the transceiver unit 26 of the image information playback device 30 receives information indicating whether a user wears the stereoscopic glasses 25. That is, the transceiver unit 23 of the stereoscopic glasses 25 transmits the information indicating whether a user wears the stereoscopic glasses 25 to the transceiver unit 26 of the image information playback device 30 and the control unit 27 of the image information playback device 30 proceeds to a next step according to the information in step S20.

If it is determined that a user wears the stereoscopic glasses 25 in step S20, the control unit 27 of the image information playback device 30 generates a 3D image through the output unit 28 in step S30.

However, if it is determined that a user does not wear the stereoscopic glasses in step S20, the control unit 27 of the image information playback device 30 generates a 2D image through the output unit 28 in step S40.

Next, if the user turns off the power of the image information playback device 30 in step S50, image output is ended and if not, a procedure feeds back to step S20 to output the 2D or 3D image according to whether a user wears the stereoscopic glasses.

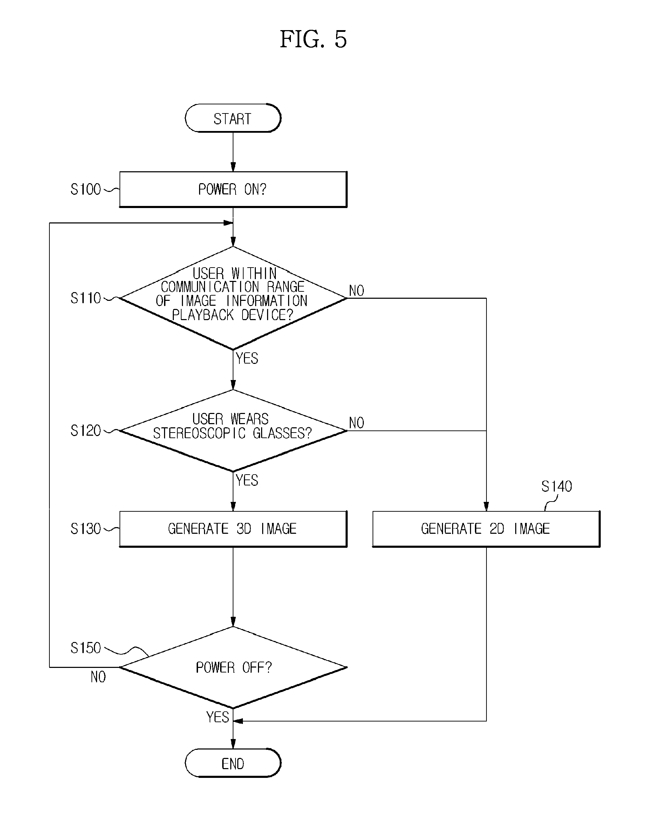

FIG. 5 is a flowchart illustrating a control method of a stereoscopic image display apparatus according to another exemplary embodiment of the present invention.

As illustrated in FIG. 5, if the power of the image information playback device 30 is turned on in step S100, the control unit 27 of the image information playback device 30 confirms whether a user is within a communication range of the transceiver unit 26 of the image information playback device 30 in step S110. For example, if the transceiver unit 26 of the image information playback device 30 is an RF transceiver, the control unit 27 controls the RF transceiver to irradiate radio waves and confirms whether the stereoscopic glasses 25 worn by the user react to the radio waves.

If it is determined that the user is within the communication range of the transceiver unit 26 of the image information playback device 30, the control unit 27 confirms whether the user wears the stereoscopic glasses 25 in step S120. The transceiver unit 23 of the stereoscopic glasses 25 transmits information indicating whether the user wears the stereoscopic glasses 25 to the transceiver unit 26 of the image information playback device 30 and the control unit 27 of the image information playback device 30 proceeds to a next step according to the information.

If it is confirmed that the user is located within the communication range of the transceiver unit 26 of the image information playback device 30 and if the user wears the stereoscopic glasses 25, the control unit 27 of the image information playback device 30 generates a 3D image in step S130.

If it is confirmed that the user is located outside the communication range of the transceiver unit 26 of the image information playback device 30, or if the user does not wear the stereoscopic glasses even though the user is located within the communication range, the control unit 27 of the image information playback device 30 generates a 2D image through the output unit 28 in step S140.

Next, if the user turns off the power of the image information playback device 30 in step S150, image output is ended, and if not, a procedure feeds back to step S110 to output the 2D or 3D image according to whether the user is within a communication range and whether the user wears the stereoscopic glasses 25.

Although in FIGS. 4 and 5 the image information playback device 30 generates a 2D or 3D image according to whether the user is within a communication range and whether a user wears the stereoscopic glasses 25, the 2D or 3D image may be generated by manually pressing or operating the switch unit 22.

Although a few exemplary embodiments of the present invention have been shown and described, it would be appreciated by those skilled in the art that changes may be made in these embodiments without departing from the principles and spirit of the invention, the scope of which is defined in the claims and their equivalents.

## Claims

1. A control method of a stereoscopic image display apparatus including stereoscopic glasses and an image information playback device, the method comprising:
sensing whether a user wears the stereoscopic glasses; and
generating, on the image information playback device, one of a two-dimensional and a three-dimensional image according to whether the user wears the stereoscopic glasses,
wherein the stereoscopic glasses and the image information playback device perform bidirectional communication.

2. The control method according to claim 1, wherein the stereoscopic glasses include one of a contact type and a non-contact type sensor, and the sensing whether the user wears the stereoscopic glasses is performed by the one of the contact type and the non-contact type sensor.

3. The control method according to claim 1, wherein if it is sensed that the user wears the stereoscopic glasses, the image information playback device generates the three-dimensional image.

4. The control method according to claim 1, wherein if it is sensed that the user does not wear the stereoscopic glasses, the image information playback device generates the two-dimensional image.

5. The control method according to claim 1, wherein the bidirectional communication includes one of infrared communication, radio frequency communication, Bluetooth communication and Wi-Fi communication.

6. The control method according to claim 1, wherein the stereoscopic glasses include a first transceiver unit, and if it is sensed that the user wears the stereoscopic glasses, the first transceiver unit transmits information indicating whether the user wears the stereoscopic glasses to the image information playback device.

7. The control method according to claim 1, wherein the stereoscopic glasses includes a switch, which is manually settable to one of a two-dimensional and a three-dimensional mode, irrespective of whether the user wears the stereoscopic glasses, and
wherein if the two-dimensional mode is set, the image information playback device generates the two-dimensional image, and if the three-dimensional mode is set, the image information playback device generates the three-dimensional image.

8. A stereoscopic image display apparatus comprising:
stereoscopic glasses; and
an image information playback device including an output unit to generate one of a two-dimensional and a three-dimensional image according to whether a user wears the stereoscopic glasses and a first transceiver unit to perform bidirectional communication with the stereoscopic glasses.

9. The stereoscopic image display apparatus according to claim 8, wherein the stereoscopic glasses include one of a contact type and non-contact type sensor to sense whether the user wears the stereoscopic glasses.

10. The stereoscopic image display apparatus according to claim 8, wherein the stereoscopic glasses include a second transceiver unit to communicate with the image information playback device.

11. The stereoscopic image display apparatus according to claim 8, wherein the stereoscopic glasses include a switch to manually select the one of a two-dimensional and a three-dimensional mode, and
wherein if the two-dimensional mode is selected, the image information playback device generates the two-dimensional image, and if the three-dimensional mode is set, the image information playback device generates the three-dimensional image.

12. The stereoscopic image display apparatus according to claim 8, wherein if the user wears the stereoscopic glasses, the image information playback device generates the three-dimensional image.

13. The stereoscopic image display apparatus according to claim 8, wherein if the user does not wear the stereoscopic glasses, the image information playback device generates the two-dimensional image.

14. The stereoscopic image display apparatus according to claim 8, wherein the bidirectional communication includes one of infrared communication, radio frequency communication, Bluetooth communication and Wi-Fi communication.
